(19) **Europäisches Patentamt / European Patent Office / Office européen des brevets**

(11) **EP 2 175 417 B1**

(12) **EUROPEAN PATENT SPECIFICATION**

(45) Date of publication and mention
of the grant of the patent:
**14.11.2012 Bulletin 2012/46**

(51) Int Cl.:
***G06T 5/00*** (2006.01)

(21) Application number: **09172291.8**

(22) Date of filing: **06.10.2009**

(54) **Method of filtering an image dataset**

Verfahren zum Filtern eines Bilddatensatzes

Procédé pour filtrer un ensemble de données

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **08.10.2008 PCT/EP2008/063448**

(43) Date of publication of application:
**14.04.2010 Bulletin 2010/15**

(73) Proprietor: **TomTec Imaging Systems GmbH
85716 Unterschleissheim (DE)**

(72) Inventor: **Brabec, Stefan
82319 Starnberg (DE)**

(74) Representative: **Müller Schupfner & Partner
Bavariaring 11
80336 München (DE)**

(56) References cited:
**EP-A- 1 755 082**

• **HUANG Q H ET AL: "Development of a portable
3D ultrasound imaging system for
musculoskeletal tissues" ULTRASONICS, IPC
SCIENCE AND TECHNOLOGY PRESS LTD.
GUILDFORD, GB, vol. 43, no. 3, 1 January 2005
(2005-01-01), pages 153-163, XP004647265 ISSN:
0041-624X**

**Description**

The present invention relates to a method of filtering an image dataset, in particular a two- or three-dimensional image dataset obtained by a medical imaging technique. The invention is also directed to an apparatus for processing an image dataset, a data carrier and a computer program product.

Medical images often contain substantial amounts of noise which has to be reduced to improve the diagnostic value of the images. To reduce noise and other artefacts, various filtering and smoothing techniques, in particular low-pass filtering for noise reduction is known in the art.

In particular, raw ultrasound data is usually filtered before the image is used for further processing, such as volume rendering of a three-dimensional dataset.

Raw ultrasound image data, however, are often not immediately available in Cartesian coordinates, but in acoustic coordinates. A two-dimensional image slice, for example, usually has the shape of a fan, because the ultrasound beams diverge from the ultrasound transducer. Therefore, the pixels along one ultrasound beam will have a varying size: The pixels closer to the transducer (the near-field) cover a smaller area each, due to the close spacing of the ultrasound beams, while the pixels far away from the transducer (the far-field) are more spaced out and therefore larger in azimuthal direction. The same problem arises if a three-dimensional image is acquired by means of a mechanical sector scanner. Such a scanner comprises an ultrasound transducer which is pivotally mounted and rotates in between individual scans by a certain angle. With this geometry, a three-dimensional dataset will have the form of a cone with acoustic coordinates. An acoustic coordinate system may be approximately like polar coordinates, but may also be different and is often specific to the device manufacturer.

When applying a normal filtering/smoothing method using a fixed kernel on a dataset having a spatially varying pixel size as described above, the kernel will be too small for those areas where the pixels are close together (in the near-field), and too big for those areas in the far-field where the pixels are far apart. Therefore, there will be too much details lost in the far-field, while the filtering/smoothing may not be sufficient in the near-field.

One solution to this problem is to resample the data to Cartesian coordinates before rendering. However, this resampling step is time intensive and therefore not suitable for real-time applications.

Another solution would be to vary the size of the filter kernel over the image dataset. The main drawback of such a spatially varying kernel is the computational complexity: For each voxel a suitable kernel size has to be determined and the corresponding kernel weights have to be computed. This is acceptable for offline pre-processing, but not suitable for real-time applications that need to run at 20Hz or higher.

EP 1 755 082 A2 discloses an image processing apparatus for reducing noise from an original image consisting of digital image data. The apparatus has an information calculator, which calculates information in relation to a spatial change in a pixel-value. A smoothed image producer produces a smoothed image by smoothing the original image. The weighting factor calculator calculates a weighting factor depending on the calculated information in relation to the pixel-value change. The weighting adder performs a weighted addition of the original image and the smoothed image. The purpose of the reference is to smooth less in areas with sharp edges, in order not to blur the contours of the image. However, the disadvantage is that the weighting factor needs to be calculated new for each image, as it depends on the pixel values. Therefore, the apparatus is not suitable for real-time applications

Therefore, it is an object of the invention to provide a filtering method which is suitable for real-time applications.

The invention provides a solution to this problem through the method according to claim 1. The proposed filtering method is an approximation to a real spatially varying filter. However, the computational effort is nearly equal to the standard, fixed kernel size filtering.

The claimed method of filtering an image dataset comprises the following steps: providing an N-dimensional input image dataset preferably containing image data in the form of pixel/voxel values; applying a filtering algorithm to the input image dataset, wherein the filtering algorithm is essentially unvarying over the dataset, to thereby obtain a filtered image dataset; providing a spatially varying weighting function between the input and the filtered image datasets; computing a weighted sum of the input image dataset and the filtered image dataset, thereby using the spatially varying weighting function, in order to obtain an output image dataset.

The N-dimensional input image dataset is preferably a one-dimensional (1D), two-dimensional (2D), three-dimensional (3D) or four-dimensional (4D) dataset. The first to third dimensions are preferably spatial dimensions, wherein the fourth dimension can be time. Thus, a 4D dataset can be a time series of several 3D image datasets. An image dataset is generally a set of data, wherein each data point (pixel or voxel value) reflects the value of a certain property of an imaged object at a certain position in space. For example, the pixel value of an X-ray image reflects the X-ray absorption rate of the tissue along the X-ray corresponding to the pixel.

A picture element corresponding to a certain data point of a 2D image is called a pixel, whereas the volume elements corresponding to the data points of 3D images are called voxels.

Generally, the input image dataset may provide an image of any type of object in space. For the purposes of the invention, it is preferred that the input image dataset is a medical image, such as an image dataset acquired with ultrasound, magnetic resonance imaging, X-ray, computed tomography, or near-infrared imaging. The input image dataset may include image data of a part of the human or animal body, most preferably the heart, any other internal organ or a fetus. Most preferred, the filtering method of the invention is applied to raw volume data acquired by ultrasound, e.g. a 3D image dataset in so-called acoustic space.

In the invention, and in contrast to EP 1 755 082 A2, the spatially varying weighting function is independent of the pixel/voxel values of the input image dataset. Thus, the weighting function is not dependent on the image content, i.e. the image data representing the imaged object, and thus is not calculated from the pixel/voxel values.

Rather, the spatially varying weighting function is preferably pre-determined. For example, the weighting function is preset depending on the type of input image dataset. Preferably, the weighting function is not selected by a user, but is automatically determined e.g. by the computing unit performing the method. Pre-determined may also mean that the weighting function is not newly determined for each new input image dataset.

Preferably, the spatially varying weighting function is pre-determined such that areas of the input image dataset where high noise is expected will have a high weighting factor for the filtered image dataset, whereas areas of the input image dataset where lower noise is expected will have a high weighting factor for the input image dataset.

According to an aspect of the invention, the spatially varying weighting function depends on the geometry of the input image dataset, for example the distribution and configuration of its pixels/voxels in space. Thus, an input image dataset in acoustic coordinates having a spatially varying pixel/voxel size may have a weighting function depending on the exact distribution of the pixel/voxel sizes in space.

In addition or alternatively, the spatially varying weighting function depends on the acquisition modality of the input image dataset. Thus, depending on the way the input image dataset was acquired, for example by rotational ultrasound, the spatially varying weighting function is determined, preferably in order to provide a high filtering specifically in such areas where strong noise or artifacts are expected from knowledge of the imaging modality.

According to an embodiment, the weighting function varies smoothly (without discontinuities) over the input image dataset.

Preferably, the filtering algorithm is a noise reduction algorithm. A noise reduction method is a certain type of filtering method which is meant to reduce noise, while preserving most of the information content of the image. For example, a noise reduction algorithm may comprise averaging data points with their neighbouring data points in an image dataset. Preferably, the noise reduction corresponds to a low-pass filter, i.e. a filter which suppresses the high spatial frequencies. The noise reduction algorithm may be a smoothing algorithm.

The filtering algorithm which is applied to the input image dataset is essentially unvarying over the dataset, which means that every pixel or voxel within the dataset is essentially treated in the same way, with the possible exception of the pixels or voxels near the edges of the dataset, where the algorithm may be adapted to compensate for edge effects. Thus, "essentially unvarying" means that the filtering or noise reduction algorithm should be unvarying at least over the central pixels or voxels of the dataset, if not over all pixels or voxels.

The word "unvarying" is to be understood in relation to the dataset, or in other words in voxel space. In real space, the filtering algorithm might be spatially varying, for example if the input image dataset is not Cartesian, but has a spatially unvarying pixel/voxel size.

The filtering algorithm preferably comprises averaging each pixel/voxel value over the neighbouring pixels/voxels. This may preferably be accomplished using a kernel smoother, wherein each filtered pixel/voxel value $Y_{filtered}$ at position $X_0$ is computed as the sum of every pixel/voxel value $Y(X_i)$, weighted with a so-called kernel function $K(X_0,X_i)$:

$$Y_{filtered}(X_0) = \sum_{i=0}^{N} \frac{K(X_0,X_i)\ Y(X_i)}{K(X_0,X_i)}$$

wherein N is the number of pixels/voxels in the data set. The kernel defines the shape of the function which is used to take the average of the neighbouring data points.

Preferably, the filtering algorithm comprises a kernel smoothing algorithm using a kernel size which does not vary over the image dataset, and is thereby essentially unvarying over the dataset. Most preferably, not only the kernel size, but also the kernel itself does not vary over the dataset. The kernel is preferably a box function or a Gaussian kernel.

After the filtering step, the input image dataset is kept, and the filtered image dataset is preferably also stored in some kind of data storage. The filtered image dataset preferably has the same dimension (i.e. data structure, including number of pixels/voxels in each direction) as the input image dataset.

The weighting function between the input and the filtered image datasets can be for example an algebraic function having a certain value (for example between 0.1, 0.2 or 0.3, and 1) for each data point of the input image dataset. The algebraic function may by calculated for each pixel/voxel during execution the method, or can be stored in a scalar dataset. In both cases, if the underlying algebraic function is pre-determined, the weighting function is considered to be pre-determined. Preferably, the weighting function is a continuous function over the input image dataset. For example, over at least part of the input image dataset, the weighting function may vary linearly, exponentially or polynomially over 1, 2 or 3 spatial variables of the input image dataset (such as x, y or z).

Alternatively, the weighting function may simply be a scalar dataset having the same dimensions (i.e. number of pixels/voxels in each direction) as the input image dataset and the filtered image dataset, and containing a weighting factor for each pixel/voxel of the input image dataset. Such scalar dataset may be computed as part of the inventive method, or may be predetermined. Furthermore, the weighting function may be user-defined.

The weighting function is spatially varying, which means that the value of the weighting function varies with at least one spatial variable of the input image dataset, e.g. with x, y and/or z. Preferably, it is a continuous and/or smooth (without discontinuities) variation.

Computing a weighted sum of the input image dataset and the filtered image dataset, thereby using the spatially varying weighting function, means that each pixel/voxel value of the input image dataset is weighted with the weighting function, and somehow combined (i.e. added, multiplied ...) with the corresponding pixel/voxel value from the filtered image dataset. The combination or weighted sum of these two values gives the corresponding pixel/voxel value of the output image dataset.

If the weighting function for a pixel/voxel at position X can be written as $W(X)$, the pixel/voxel value of the input image dataset at the corresponding position as $I(X)$, the pixel/voxel value of the filtered image dataset at the corresponding position as $S(X)$ and the pixel/voxel value of the output image dataset at the corresponding position as $O(X)$, the weighted sum may preferably be computed according to the following equation, which describes a linear weighted sum:

$$O(X) = I(X) \ W(X) + S(X) \ [W(X)-1]$$

The above formula assumes that the weighting function $W$ is always between 0 and 1. If this is not the case, the weighted sum has to be normalised.

The main benefit of the inventive filtering method is that the computational effort is almost the same as with a standard, fixed kernel size filtering. In fact, the step of applying the filtering algorithm is identical in computational effort to a normal filtering step. The only additional step is the computation of the weighted sum of the input and the filtered image datasets. However, since this comprises preferentially only two multiplications and one sum for each data point, the overall computational effort is small.

The resulting output image dataset is ideally weighted between the original and the filtered dataset such that it looks like an image produced with a spatially varying filter, for example a filter using a spatially varying kernel.

According to a preferred embodiment, the input image dataset has a spatially varying pixel or voxel size. In other words, the pixels/voxels are not equally spaced in Cartesian coordinates. An example of such an image dataset is one where the pixels/voxels are spaced along several rays radially extending from a centre point, as could be the case in acoustic coordinates.

According to another embodiment, the input image dataset has a spatially varying noise distribution. This is another application where it is advantageous to apply a spatially varying smoothing filter, to thereby smooth the image more strongly in some areas. An example of an image dataset where it is desired to smooth more strongly in certain areas will be given later.

As mentioned above, the input image dataset is preferably a raw image dataset obtained by medical ultrasound imaging. These types of datasets may be fan-shaped, as obtained by an ultrasound probe scanning a flat fan-shaped tissue section with several divergent beams. Alternatively, the raw image dataset may be a 3D cone-shaped dataset obtained by rotating a probe having a fan-shaped field of view through the imaged object, or a 3D dataset obtained by panning a 2D probe through a certain sector in space. As another alternative, the input image dataset may be a 3D or 4D image dataset acquired with a matrix-probe, which is designed to scan a complete 3D volume without mechanical movement of the probe.

Such fan- or cone-shaped datasets are classical examples for datasets having a spatially varying pixel/voxel size, where it is advantageous to apply the filtering method of the invention such that those areas with smaller pixel size are filtered or noise-reduced more strongly than those areas with a large pixel size, such as in the far-field. Preferably, the input image dataset is in acoustic coordinates, which could be the case for fan-shaped or cone-shaped raw image datasets obtained by medical ultrasound imaging. Preferably, such cone-shaped image datasets are obtained with a so-called TEE-probe (Transesophageal echocardiogram). A TEE probe is swallowed by the subject and thus is inserted into the esophagus to approach the heart. The probe is then rotated to thereby acquire a set of fan-shaped images in different rotational angles. These images may be combined to a 3D cone-shaped dataset. This is also called rotational ultrasound.

The spatially varying weighting function is preferably varying linearly, quadratically or cubically with at least one coordinate direction (or in other words, spatial variable) of the dataset. The power of the polynomial variation is preferably related to the number of dimensions in which the pixel/voxel size varies spatially, i.e. if the pixel/voxels have constant height, but their width and length increase in one direction, the weighting function should vary quadratically. The weighting function preferably varies with 1, 2, 3 or even 4 coordinate directions (including the time coordinate). Less preferably, the spatially varying function may not be described by an algebraic function and may thus have any desired variation over the dataset.

The output image dataset is preferably visualized, for example by generating a two-dimensional perspective image by means of rendering.

Rendering is a process by which a two-dimensional perspective image is generated from a 3D dataset. In surface rendering, for example, the interfaces between different structures in the 3D dataset are extracted from the image data. These interfaces are then illuminated with a virtual light source, and the visual impression is computed and thus a 2D perspective image generated. Surface rendering is used for example to produce a picture of the face of a fetus from 3D ultrasound data obtained from pregnant women, or for visualizing structures of the heart.

In a volume rendering process, the voxels of a 3D image volume are classified according to their optical properties, for example into transparent or opaque. In a next step a 2D image is generated which corresponds to a view onto the 3D image dataset from a certain line of vision.

Since such rendering techniques are very useful for diagnostic purposes, but require filtered image data, the filtering method of the invention is preferably applied to a 3D dataset before the rendering step.

Finally, the rendered image is preferably viewed on a screen or printed to hardcopy.

So far, the invention has been described primarily for an embodiment in which one filtered image dataset is combined with one unfiltered (input) image dataset. However, the invention also covers the case of several filtered datasets obtained by different filtering algorithms, which are combined with each other, and possibly also with the input dataset. In this embodiment, at least two, alternatively three, four, five or more filtered image datasets $S_1, S_2, S_3,...$ are computed with different filtering algorithms. The output image dataset O is preferably a linear combination of the at least two filtered image datasets $S_1, S_2$ and optionally the input image dataset I:

$$O(X) = S_1(X) \ W_1(X) + S_2(X) \ W_2(X) + I(X) \ W_3(X)$$

wherein I(X) is a pixel/voxel value of the input image dataset at one position, and $S_1(X), S_2(X)$ are pixel/voxel values of two filtered image datasets at the corresponding positions. The respective weights $W_1(X), W_2(X), W_3(X)$ can be computed from at least one spatially varying weighting function. Preferably, the sum of all weights at each pixel/voxel is 1. The weights $W_1, W_2, W_3$ may be described by one weighting function each, or by one poly-dimensional weighting function.

It may be useful to combine two differently filtered image datasets $S_1(X)$ and $S_2(X)$ with each other, with or without the input image dataset. In the latter case, the weight $W_3$ will be zero for all X.

The invention is also directed to an apparatus for processing an image dataset according to claim 10. The apparatus may be an ultrasound scanner. However, since the inventive method may be carried out offline, i.e. on data acquired previously, the apparatus may also be any computer system such as PC or workstation. The apparatus requires essentially a data storage, such as a conventional hard disk, and a computing unit such as a conventional processor. In addition, the apparatus may have all other components of a computer system, such as mother-board, a display unit such as a computer screen, a keyboard and a mouse. In particular, the apparatus preferably comprises a screen adapted for displaying the output image dataset. Furthermore, the apparatus is preferably capable of carrying out the method of the invention.

Furthermore, the invention is directed to a data carrier containing electronically readable signals, which may interact with a programmable computer system to thereby execute the method of the invention. The data carrier is preferably an electronically readable medium such as a CD-ROM, diskette, hard disk or DVD.

Finally, the invention is directed to a computer programme product comprising programme code for executing the inventive method, whenever the programme is executed on a computer. The computer programme product is preferably stored on the above-mentioned data carrier.

Preferred embodiments of the invention shall now be described with reference to the accompanying drawings, which show:

Fig. 1    a schematic perspective view of a TEE probe and its field of view;

Fig. 2    a schematic representation of a fan-shaped image dataset;

Fig. 3    a schematic representation of a cone-shaped image dataset obtained by rotational ultrasound;

Fig. 4    a schematic representation of one slice through the dataset of Fig. 3;

Fig. 5    a graph of a discrete Gaussian kernel;

Fig. 6    a graph of a discrete box function kernel;

Fig. 7    a flow chart of an embodiment of the method according to the invention;

Fig. 8    a schematic representation of an image dataset in polar coordinates;

Fig. 9    a schematic representation of the image dataset of Fig. 8, shown distorted onto Cartesian geometry;

Fig. 10    a graph of a weighting function;

Fig. 11    a schematic representation of a 2D dataset obtained by rotational ultrasound;

Fig. 12    the dataset of Fig. 11, highlighting the inner region;

Fig. 13    the dataset of Fig. 11, highlighting the outer region;

Fig. 14    a graph of a weighting function;

Fig. 15    a schematic representation of an embodiment of the apparatus according to the invention;

Fig. 16    an image rendered from 3D raw ultrasound data of the heart, unfiltered;

Fig. 17    an image rendered from the same 3D raw ultrasound data of the heart of Fig. 16, but after the filtering method of the invention was applied.

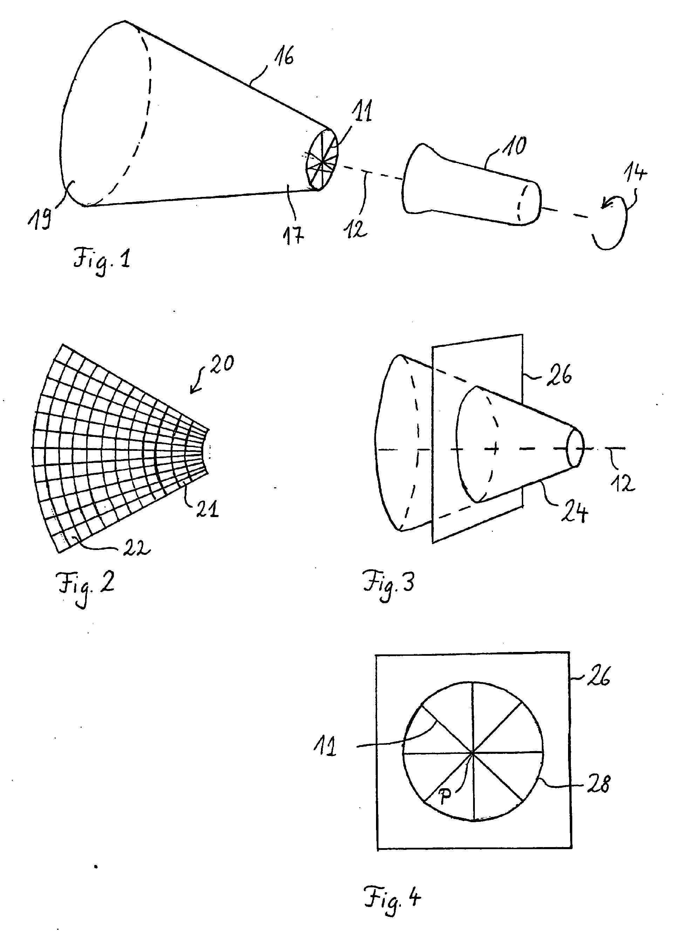

Figure 1 is a schematic drawing of an ultrasound probe 10 which may be used to take a transesophageal echocardiogram (TEE). Such probes 10 are adapted to scan a fan-shaped image slice, as depicted in Fig. 2.

When rotating the probe 10 around its axis 12, as shown by arrow 14, a number of radial slices 11 may be acquired.

The field of view 16 of such a probe 10 is therefore approximately cone-shaped. In the so-called near-field 17, i.e. the area nearer to the probe 10, the ultrasound rays converge, and therefore the data points corresponding to neighbouring voxels are closer together. This is exemplified in Fig 2 by pixel 21.

In the area further away from the probe 10, the so-called far-field 19, the ultrasound rays diverge, and therefore the data points corresponding to one voxel are further apart, as exemplified by voxel 22 in Fig. 2.

Please note that the 2D image dataset of Fig. 2 may be generated with any kind of ultrasound probe adapted for 2D imaging, not only the TEE probe 10 shown in Figure 1. Thus, the inventive method may be applied to any type of ultrasound image data.

Fig. 3 demonstrates further the principle of rotating ultrasound: A cone-shaped 3D dataset 24 can be generated for example with TEE probe 10 according to Fig. 1. For visualization, a plane 26 is placed through the cone-shaped dataset 24, perpendicular to axis 12, and the data points along plane 26 are extracted. The image slice 28 hereby generated is shown in Fig. 4. The 2D image dataset 28 is essentially circular and is build up by image data spaced along radial lines 11, which ideally should all cross the centre point P. As will be explained in more detail below, it can be advantageous to apply the method of the invention on this type of dataset 28.

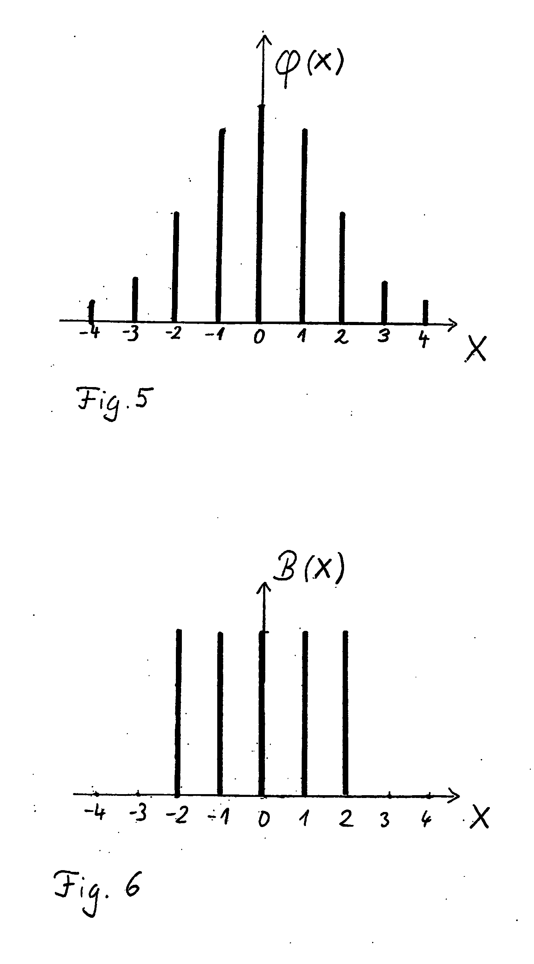

According to the inventive method, a filtering algorithm is applied on the input dataset, which may have a format as shown in Figs. 2 or 4, or any other format. Preferably, the filtering algorithm is a kernel smoother, whereby each data point is averaged with its neighbours in the image according to a certain kernel function. Figs. 5 and 6 show examples of suitable kernels.

Please note that, while Figs. 5 and 6 show 1D kernels, the same kernel functions may be 2D or 3D. For this reason, the Figures show the kernel functions depending on an unspecified variable X, which may be any spatial variable such as x, y, z in Cartesian coordinates, or r in polar coordinates. Usually, the kernel function will be isotropic. Furthermore, since the kernel is applied to a dataset with discrete data points, it is preferably also discrete. Ideally, the sum of every value of the kernel function will be 1, since this avoids any normalisation during the filtering step.

Fig. 5 shows an example of a 1D Gaussian function $\varphi(X)$ with 9 data points. Below -4 and above 4, the value of the kernel function will be 0. Thus, a filtering or smoothing step using this kernel will result in an averaging over the nearest 9 pixels.

Fig. 6 shows an example of a box function B(X) with 5 data points. If this function is in 2D, it should be 5x5 box function, wherein each point has a value of 0.04, so that the sum of all data points is 1. However, please note that other kernel functions may also be used.

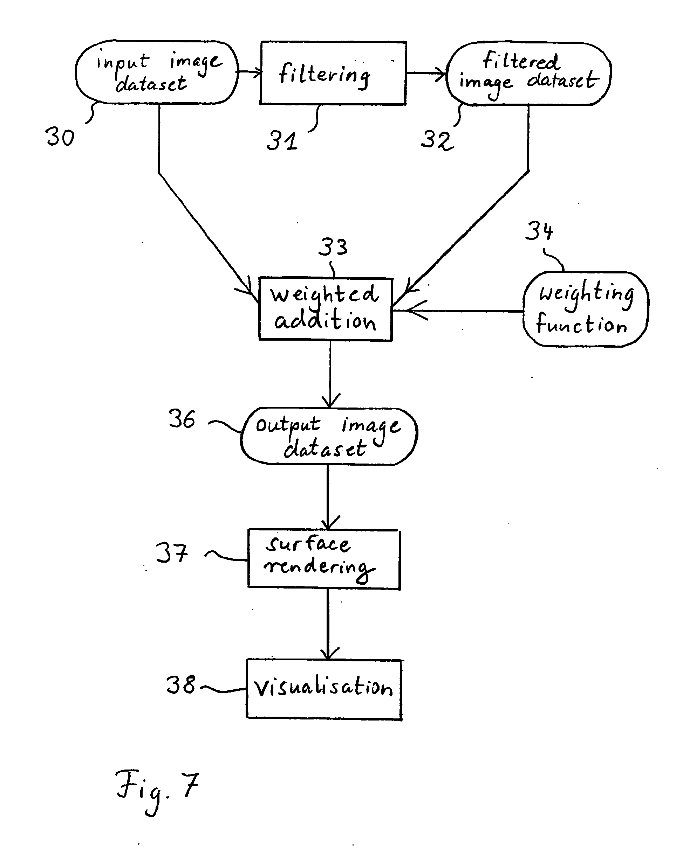

Fig. 7 shows an overview of a method according to preferred embodiment of the invention. An input image dataset 30 is received from an input source, e.g. from an ultrasound machine, from a data storage (offline) or from a network. The input image dataset is filtered in step 31, preferably with a kernel filter with a fixed kernel size, e.g. a Gaussian smoothing filter with a kernel size of 5x5 in the azimuthal and elevational direction. Thereby, a filtered image data set 32 is generated. The original (unfiltered) input image dataset is kept.

At 34, a spatially varying weighting function between the filtered and the input image dataset is either computed, or provided from some input source. Since this function is simple to evaluate, e.g. a linear, quadratic or other polynomial ramp between the near-field and the far-field, it can be computed voxel by voxel in real time.

In step 33, the input image dataset and the filtered image dataset are added, thereby using the spatially varying weighting function 34, e.g. using the formula cited above. The result of this weighted addition 33 is an output image dataset 36 having the same data structure as the input image dataset 30 and the filtered image dataset 32. If a suitable weighting function 34 has been used, the output image dataset 36 may for example achieve good smoothing in the near-field, while keeping the detail in the far-field.

Optionally, surface or volume rendering is applied on the output image dataset 36 in step 37. The result of the rendering is visualized e.g. on a screen in step 38.

The whole method as shown in Fig. 7 may be carried out in real time. This means that the practitioner may view the filtered and rendered image immediately after acquiring the image data, without any noticeable waiting times in-between.

The filtering method of the invention can be used for black and white image data or for colour image data.

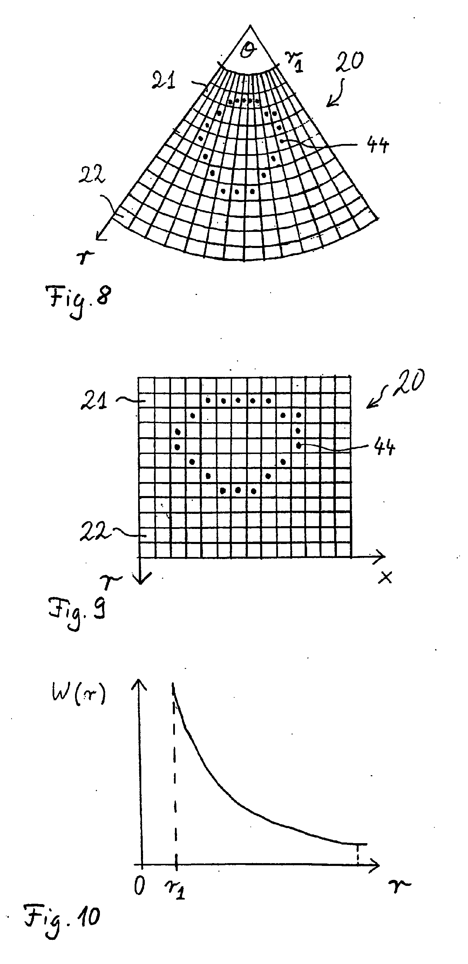

Two different preferred applications of the invention shall now be described with reference to Figs. 8-10 and 11-14, respectively.

Fig. 8 shows a 2D fan-shaped input image dataset, which may for example be generated by ultrasound. The slice spans an angle of $\theta$, and the radial dimension (range) is shown as r. The raw image data are in acoustic coordinates, which has the consequence that pixels such as pixel 21 close to the origin are small, while pixels 22 in the far-field cover a larger area in real space. Thus, the image dataset 20 has a spatially varying pixel size.

To demonstrate the consequences of this spatially varying pixel size on the filtering algorithm, the same dataset 20 is shown in Fig. 9 spread onto Cartesian coordinates, but without a re-sampling step. Therefore, the structure 44, which is shown as a circle of dots, is severely distorted. If a standard filtering algorithm using a fixed size kernel would be applied to the dataset of Fig. 8, it would be impossible to select a kernel size which is optimal for both the near-field and the far-field: If the filter is set up such that the near-field, (e.g. pixel 21) looks good, the far-field would be too blurred, due to the large kernel size. On the other hand, if the filter is designed for the far-field to look good, the smoothed image is often not enough smoothed in the near-field.

Therefore, the invention provides a method wherein different degrees of smoothing may be applied to different areas of the image dataset, while still using a smoothing algorithm which is essentially unvarying over the dataset, e.g. by using a fixed-size kernel.

For example, a box-size kernel with size 3x3 may be applied on dataset 20.

A suitable weighting function W(r) for this dataset is shown in Fig. 10: The weighting function W(r) is independent of angle $\theta$, but has a quadratic fall off from the near-field to the far-field, i.e. it is proportional to 1/r, wherein r is the range direction. This is because we have quadratic kernel 3x3, the weighting function should also vary quadratically. The first data point $W(r_1)$ of the weighting function corresponds to the first pixel row in dataset 20, which is at a certain distance $r_1$ from the origin.

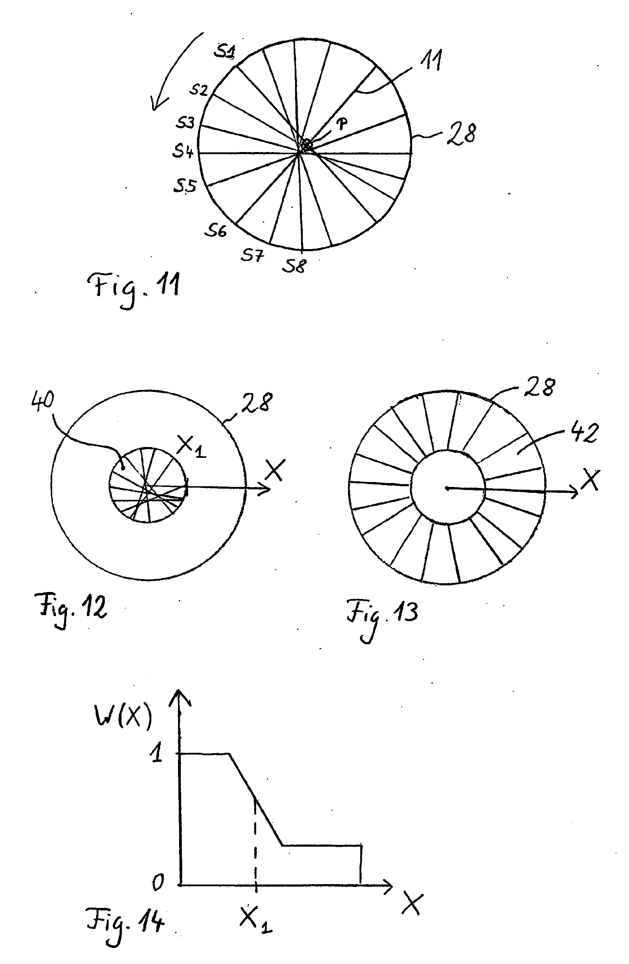

Fig. 11 shows a different type of dataset 28, which is the type of circular image plane which may be obtained by putting a slice through a cone-shaped dataset 24 acquired by means of rotating ultrasound, see Figs. 3 and 4. As mentioned above, the dataset is acquired slice by slice, while the probe 10 is rotated e.g. by a small electric machine. However, during the acquisition period, the subject will usually move, so that the slices S1, S2, ..., S8 will not be ideally located, and in particular will not all cross the centre point P. Furthermore, it is possible that the electric machine is not precise, so that the angles between adjacent slices will not be exactly identical.

However, these deviations cannot be traced, so that the observer has to assume that the centre point of each slice S1, S2, ..., S8 will be at the position of point P. To alleviate the artefacts created by these impositions, one should apply a comparatively strong smoothing or filtering algorithm in the centre of dataset 28. The peripheral regions of dataset 28, by contrast, can be filtered to a lesser degree.

This is demonstrated in Figs. 12 and 13, wherein Fig. 12 highlights the inner ring 40, which extends up to radial

coordinate $X_1$ and requires more filtering to avoid artefacts in this region. The outer ring 42 is depicted in Fig. 13 and requires less filtering/smoothing.

After a filtering step e.g. with fixed size kernel has been applied to dataset 28, the original and the filtered datasets may be combined using the weighting function W(X) shown in Fig. 14. This weighting function has a plateau of value 1 near the centre (X=0), and another plateau at a lower value in the area of the outer ring 42. At the boundary, i.e. at the radial coordinate $X_1$, a linear ramp is provided between the two plateaus. Alternatively, the weighting function may be a step function between the central area 40 and the outer ring 42.

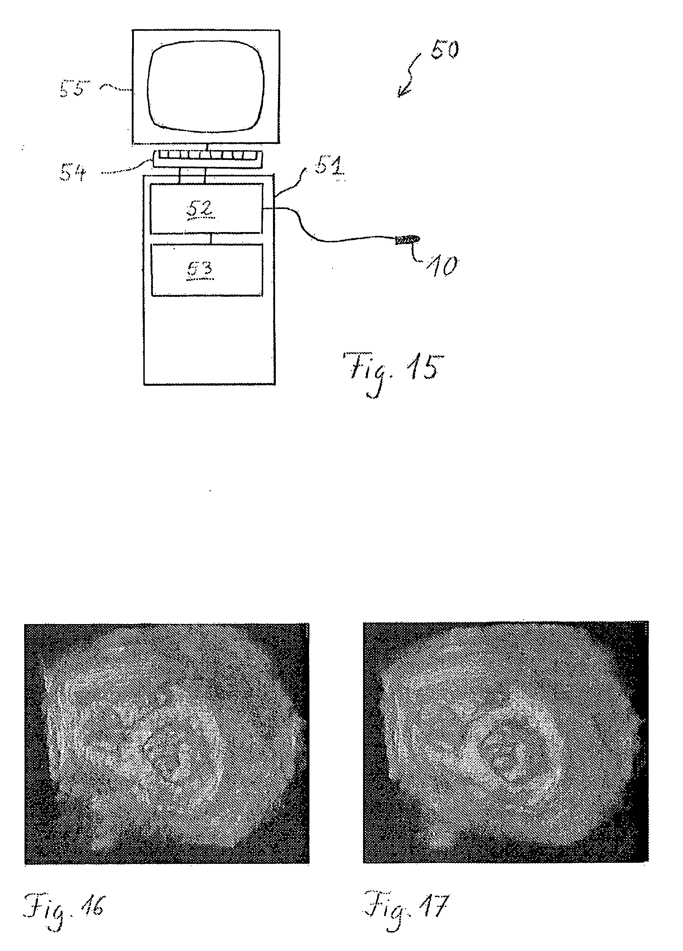

Fig. 15 shows a preferred embodiment of the apparatus according to the invention. The invention can be embodied in an ultrasound machine 50 comprising a probe 10, such as the TEE probe shown in Fig. 1. The probe is connected to the control unit 51 of the ultrasound machine 50, which comprises a processing unit 52 and a data storage unit 53 which are adapted to perform the method according to the invention. In addition, the processing unit 52 may be connected to a keyboard 54 and optionally a mouse or other cursor control device (not shown). Furthermore, a screen 55 for viewing the output image dataset is also provided.

Alternatively, the method of the invention may be carried out offline on any type of computer system, which need not be part of an ultrasound machine.

Finally, Fig. 16 and 17 demonstrate the effect of the filtering method of the invention to reduce near-field artefacts, while keeping far-field detail. Fig. 16 is a surface-rendered image generated from a 3D ultrasound dataset of the heart. The 3D input dataset was generated by panning an ultrasound probe having a fan-shaped field-of-view, so that the input image dataset has a smaller pixel size in the near-field and a larger pixel-size in the far-field. Fig. 16 shows the image rendered from the original raw data. Since no filtering has been applied, blocky artefacts are visible in the near-field.

On the same raw image dataset, the filtering method according to the invention was applied. A 5x5 kernel was used in the azimuthal-elevation direction, and a weighting function with a quadratic fall off from the near- to the far-field was used, due to the quadratic kernel NxN. From the thus computed output image dataset, a rendered image was generated using the same rendering algorithm as for Fig. 16.

As can be seen on Fig. 17, a good filtering was achieved in the near-field, while keeping detail in the far-field.

## Claims

1. A method of filtering an image dataset, having the following steps:

   - providing an N-dimensional medical input image dataset (30) acquired with ultrasound;
   - applying a filtering algorithm (31) to the input image dataset (30), wherein the filtering algorithm is essentially unvarying over the dataset, to thereby obtain a filtered image dataset (32), wherein this step may be repeated with different filtering algorithms (31) to thereby obtain further filtered image datasets (32);
   - providing a spatially varying weighting function (34) between the input and the at least one filtered image dataset;
   - computing (33) a weighted sum of the input image dataset and the at least one filtered image dataset, thereby using the spatially varying weighting function (34), in order to obtain an output image dataset (36).

   **characterized in that**
   the N-dimensional input image dataset (30) contains image data in the form of pixel/voxel values, and the spatially varying weighting function is independent of the pixel/voxel values of the input image dataset, and
   **in that** the spatially varying weighting function depends on the geometry of the input image data set (30), namely the distribution and configuration of its pixels/voxels in space, wherein the input image data set (30) has a spatially varying pixel/voxel size, and/or the spatially varying weighting function depends on the acquisition modality of the input image data set (28).

2. The method of claim 1, wherein the spatially varying weighting function is pre-determined.

3. The method of any one of the preceding claims, wherein the filtering algorithm (31) is a noise reduction algorithm, and the filtered image dataset (32) is a noise reduced image dataset.

4. The method of any one of the preceding claims, wherein the input image dataset (30) is an image dataset (20) having a spatially varying pixel or voxel size.

5. The method of any one of the preceding claims, wherein the input image dataset (30) is an image dataset (28) having a spatially varying noise distribution.

6. The method of any one of the preceding claims, wherein the input image dataset (30) is a raw image dataset (20, 28) obtained by medical ultrasound imaging, in particular in acoustic coordinates.

7. The method of one of the preceding claims, wherein the filtering algorithm (31) comprises a kernel filtering algorithm using a kernel size which does not vary over the dataset.

8. The method according to any of the preceding claims, wherein at least two filtered image datasets (32) are computed with different filtering algorithms (31), and wherein the output image dataset (36) is a linear combination of the at least two filtered image datasets (32) with or without the input image dataset (30), the weights of the linear combination being described by at least one spatially varying weighting function.

9. A method of filtering an image dataset, having the following steps:

- providing an N-dimensional medical input image dataset (30) acquired with ultrasound;
- applying a first filtering algorithm (31) to the input image dataset (30), wherein the filtering algorithm is essentially unvarying over the dataset, to thereby obtain a first filtered image dataset (32);
- applying a second filtering algorithm (31) to the input image dataset (30), wherein the filtering algorithm is essentially unvarying over the dataset, to thereby obtain a second filtered image dataset (32); wherein this step may be repeated with different filtering algorithms (31) to thereby obtain further filtered image datasets (32);
- providing a spatially varying weighting function (34) between the at least two filtered image dataset and optionally the input image dataset (30);
- computing (33) a weighted sum of the at least two filtered image datasets, or a weighted sum of the at least two filtered image datasets (32) and the input image dataset (30), thereby using the spatially varying weighting function (34), in order to obtain an output image dataset (36),

characterized in that
the N-dimensional input image dataset (30) contains image data in the form of pixel/voxel values, and the spatially varying weighting function is independent of the pixel/voxel values of the input image dataset, and
in that the spatially varying weighting function depends on the geometry of the input image data set (30), namely the distribution and configuration of its pixels/voxels in space, wherein the input image data set (30) has a spatially varying pixel/voxel size, and/or the spatially varying weighting function depends on the acquisition modality of the input image data set (28)

10. An apparatus (50) for processing an image dataset, wherein the apparatus comprises:

- a data storage (53) in which an N-dimensional medical input image dataset (30) acquired with ultrasound, containing image data in the form of pixel/voxel values is stored, and which is capable of storing further image datasets as well as a spatially varying weighting function (34), the spatially varying weighting function being independent of the pixel/voxel values;
- a computing unit (52), which is adapted to apply a filtering algorithm (31) to the input image dataset (30), wherein the filtering algorithm (31) is essentially unvarying over the dataset, to thereby obtain a filtered image dataset (32), and which is adapted to compute a weighted sum of the input image dataset and the filtered image dataset, thereby using the spatially varying weighting function (34), in order to obtain an output image dataset (36),

characterized in that
the N-dimensional input image dataset (30) contains image data in the form of pixel/voxel values, and the spatially varying weighting function is independent of the pixel/voxel values of the input image dataset, and
in that the spatially varying weighting function depends on the geometry of the input image data set (30), namely the distribution and configuration of its pixels/voxels in space, wherein the input image data set (30) has a spatially varying pixel/voxel size, and/or the spatially varying weighting function depends on the acquisition modality of the input image data set (28).

11. The apparatus (50) according to claim 10, which is capable of carrying out the method according to any one of claims 1 to 9.

12. Data carrier containing electronically readable signals, which may interact with a programmable computer system to thereby execute the method according to any one of claims 1 to 9.

13. Computer program product comprising program code for executing the method according to one of claims 1 to 9 whenever the program is executed on a computer.

**Patentansprüche**

1. Verfahren zum Filtern eines Bilddatensatzes, welches die folgenden Schritte aufweist:

- Bereitstellen eines N-dimensionalen medizinischen Eingabebilddatensatzes (30), welcher mittels Ultraschall erfasst wurde;
- Anwenden eines Filteralgorithmus (31) auf den Eingabebilddatensatz (30), wobei der Filteralgorithmus im Wesentlichen über den Datensatz unverändert ist, um dadurch einen gefilterten Bilddatensatz (32) zu erhalten, wobei dieser Schritt mit unterschiedlichen Filteralgorithmen (31) wiederholt werden kann, um dadurch weitere gefilterte Bilddatensätze (32) zu erhalten;
- Bereitstellen einer räumlich variierenden Gewichtungsfunktion (34) zwischen dem Eingabebilddatensatz und wenigstens einem gefilterten Bilddatensatz;
- Berechnen (33) einer gewichteten Summe des Eingabebilddatensatzes und des wenigstens einen gefilterten Bilddatensatzes unter Verwendung der räumlich variierenden Gewichtungsfunktion (34), um einen Ausgabebilddatensatz (36) zu erhalten,

**dadurch gekennzeichnet, dass**
der N-dimensionale Eingabebilddatensatz (30) Bilddaten in Form von Pixel-/Voxel-Werten enthält, und die räumlich variierende Gewichtungsfunktion unabhängig von den Pixel-/Voxel-Werten des Eingabebilddatensatzes ist, und dass die räumlich variierende Gewichtungsfunktion von der Geometrie des Eingabebilddatensatzes (30), nämlich der Verteilung und Konfiguration seiner Pixel/Voxel im Raum, abhängt, wobei der Eingabebilddatensatz (30) eine räumlich variierende Pixel-/Voxel-Größe aufweist, und/oder die räumlich variierende Gewichtungsfunktion von der Erfassungsmodalität des Eingabebilddatensatzes (30) abhängt.

2. Verfahren nach Anspruch 1, wobei die räumlich variierende Gewichtungsfunktion vorbestimmt ist.

3. Verfahren nach einem der vorhergehenden Ansprüche, wobei der Filteralgorithmus (31) ein Rauschunterdrückungsalgorithmus ist, und der gefilterte Bilddatensatz (32) ein rauschunterdrückter Bilddatensatz ist.

4. Verfahren nach einem der vorhergehenden Ansprüche, wobei der Eingabebilddatensatz (30) ein Bilddatensatz (20) mit einer räumlich variierenden Pixel- oder Voxel-Größe ist.

5. Verfahren nach einem der vorhergehenden Ansprüche, wobei der Eingabebilddatensatz (30) ein Bilddatensatz (28) mit einer räumlich variierenden Rauschverteilung ist.

6. Verfahren nach einem der vorhergehenden Ansprüche, wobei der Eingabebilddatensatz (30) ein Rohbilddatensatz (20, 28) ist, welcher mittels medizinischer Ultraschallbildgebung erhalten wurde, insbesondere in akustischen Koordinaten.

7. Verfahren nach einem der vorhergehenden Ansprüche, wobei der Filteralgorithmus (31) einen Kernelfilteralgorithmus umfasst, welcher eine Kernel-Größe verwendet, welche über den Datensatz nicht variiert.

8. Verfahren nach einem der vorhergehenden Ansprüche, wobei wenigstens zwei gefilterte Bilddatensätze (32) mit unterschiedlichen Filteralgorithmen (31) berechnet werden, und wobei der Ausgabebilddatensatz (36) eine lineare Kombination der wenigstens zwei gefilterten Bilddatensätze (32) mit oder ohne den Eingabebilddatensatz (30) ist, wobei die Gewichtungen der linearen Kombination durch wenigstens eine räumlich variierende Gewichtungsfunktion beschrieben werden.

9. Verfahren zur Filterung eines Bilddatensatzes, welches die folgenden Schritte aufweist:

- Bereitstellen eines N-dimensionalen medizinischen Eingabebilddatensatzes (32), welcher mittels Ultraschall erfasst wurde;
- Anwenden eines ersten Filteralgorithmus (31) auf den Eingabebilddatensatz (30), wobei der Filteralgorithmus im Wesentlichen über den Datensatz unverändert ist, um dadurch einen ersten gefilterten Bilddatensatz (32) zu erhalten;

- Anwenden eines zweiten Filteralgorithmus (31) auf den Eingabebilddatensatz (30), wobei der Filteralgorithmus im Wesentlichen über den Datensatz unverändert ist, um dadurch einen zweiten gefilterten Bilddatensatz (32) zu erhalten; wobei dieser Schritt mit unterschiedlichen Filteralgorithmen (31) wiederholt werden kann, um dadurch weitere gefilterte Bilddatensätze (32) zu erhalten;

- Bereitstellen einer räumlich variierenden Gewichtungsfunktion (34) zwischen den wenigstens zwei gefilterten Bilddatensätzen und optional dem Eingabebilddatensatz (30);

- Berechnen (33) einer gewichteten Summe der wenigstens zwei gefilterten Bilddatensätze oder einer gewichteten Summe der wenigstens zwei gefilterten Bilddatensätze (32) und des Eingabebilddatensatzes (30), unter Verwendung der räumlich variierenden Gewichtungsfunktion (34), um einen Ausgabebilddatensatz (36) zu erhalten,

**dadurch gekennzeichnet, dass**

der N-dimensionale Eingabebilddatensatz (30) Bilddaten in Form von Pixel-/Voxel-Werten enthält, und die räumlich variierende Gewichtungsfunktion unabhängig von den Pixel-/Voxel-Werten des Eingabebilddatensatzes ist, und dass die räumlich variierende Gewichtungsfunktion von der Geometrie des Eingabebilddatensatzes (30), nämlich der Verteilung und Konfiguration seiner Pixel/Voxel im Raum, abhängt, wobei der Eingabebilddatensatz (30) eine räumlich variierende Pixel-/Voxel-Größe aufweist, und/oder die räumlich variierende Gewichtungsfunktion von der Erfassungsmodalität des Eingabebilddatensatzes (28) abhängt.

10. Vorrichtung (50) zur Verarbeitung eines Bilddatensatzes, wobei die Vorrichtung umfasst:

- einen Datenspeicher (53), in welchem ein mittels Ultraschall erfasster N-dimensionaler medizinischer Eingabebilddatensatz (30), enthaltend Bilddaten in Form von Pixel-/Voxel-Werten, gespeichert wird, und welcher in der Lage ist, weitere Bilddatensätze sowie eine räumlich variierende Gewichtungsfunktion (34) zu speichern, wobei die räumlich variierende Gewichtungsfunktion unabhängig von den Pixel-Voxel-Werten ist;

- eine Recheneinheit (52), welche geeignet ist, einen Filteralgorithmus (31) auf den Eingabebilddatensatz (30) anzuwenden, wobei der Filteralgorithmus (31) im Wesentlichen über den Datensatz unverändert ist, um dadurch einen gefilterten Bilddatensatz (32) zu erhalten, und welche geeignet ist, eine gewichtete Summe des Eingabebilddatensatzes und des gefilterten Bilddatensatzes zu berechnen, unter Verwendung der räumlich variierenden Gewichtungsfunktion (34), um einen Ausgabebilddatensatz (36) zu erhalten,

**dadurch gekennzeichnet, dass**

der N-dimensionale Eingabebilddatensatz (30) Bilddaten in Form von Pixel-/Voxel-Werten enthält, und die räumlich variierende Gewichtungsfunktion unabhängig von den Pixel-/Voxel-Werten des Eingabebilddatensatzes ist, und dass die räumlich variierende Gewichtungsfunktion von der Geometrie des Eingabebilddatensatzes (30), nämlich der Verteilung und Konfiguration seiner Pixel/Voxel im Raum, abhängt, wobei der Eingabebilddatensatz (30) eine räumlich variierende Pixel-/Voxel-Größe aufweist, und/oder die räumlich variierende Gewichtungsfunktion von der Erfassungsmodalität des Eingabebilddatensatzes (30) abhängt.

11. Vorrichtung (50) nach Anspruch 10, welche in der Lage ist, das Verfahren nach einem der Ansprüche 1 bis 9 durchzuführen.

12. Datenträger, enthaltend elektronisch lesbare Signale, welche mit einem programmierbaren Computersystem interagieren können, um dadurch das Verfahren nach einem der Ansprüche 1 bis 9 auszuführen.

13. Computerprogrammprodukt, umfassend Programmcode für die Ausführung des Verfahrens nach einem der Ansprüche 1 bis 9, immer wenn das Programm auf einem Computer ausgeführt wird.

**Revendications**

1. Procédé pour filtrer un ensemble de données d'image comprenant les étapes suivantes consistant à :

- fournir un ensemble de données d'image d'entrée à des fins médicaux à N dimensions (30) acquis avec des ultrasons ;

- appliquer un algorithme de filtrage (31) pour l'ensemble de données d'image d'entrée (30), dans lequel l'algorithme de filtrage est essentiellement invariant sur l'ensemble de données, afin d'obtenir de ce fait un ensemble de données d'image filtré (32) cependant cette étape pourrait être répétée avec différents types d'algorithmes (31) de filtrage afin d'obtenir de ce fait d'autres ensembles de données d'image filtrés (32) ;
- fournir une fonction de pondération avec variation spatiale (34) entre l'ensemble de donnés d'image d'entrée et l'au moins un ensemble de données d'image filtré ;
- calculer (33) une somme pondérée de l'ensemble de données d'image d'entrée et ledit au moins un ensemble de données d'image filtré, utilisant de ce fait la fonction de pondération avec variation spatiale (34) afin d'obtenir un ensemble de données d'image de sortie (36).

**caractérisé en ce que**
l'ensemble de données d'image d'entrée à N dimensions (30) contienne des données d'image en forme de valeurs pixel/voxel, et la fonction de pondération avec variation spatiale soit indépendante des valeurs en pixel/voxel de l'ensemble de données d'image d'entrée, et
**en ce que** la fonction de pondération avec variation spatiale dépende de la géométrie de l'ensemble de données d'image d'entrée (30), c'est-à-dire de la distribution et configuration de ses pixels/voxels dans l'espace, cependant l'ensemble de données d'image d'entrée (30) possède une taille en pixel/voxel avec variation spatiale, et/ou la fonction de pondération avec variation spatiale dépend de la modalité d'acquisition de l'ensemble de données d'image d'entrée (28).

2. Procédé selon la revendication 1, dans lequel la fonction de pondération avec variation spatiale est prédéterminée.

3. Procédé selon l'une des revendications précédentes, dans lequel l'algorithme de filtrage (31) est un algorithme de réduction de bruit, et l'ensemble de données d'image filtré (32) est un ensemble de données d'image avec réduction de bruit.

4. Procédé selon l'une quelconque des revendications précédentes, dans lequel l'ensemble de données d'image d'entrée (30) est un ensemble de données d'image (20) possédant une taille avec variation spatiale en pixel ou voxel.

5. Procédé selon l'une quelconque des revendications précédentes, dans lequel l'ensemble de données d'image d'entrée (30) est un ensemble de données d'image (28) possédant une distribution de bruit avec variation spatiale.

6. Procédé selon l'une quelconque des revendications précédentes, dans lequel l'ensemble de données d'image d'entrée (30) est un ensemble de données d'image brutes (20, 28) obtenu par une imagerie médicale à ultrasons, en particulier en coordonnées acoustiques.

7. Procédé selon l'une quelconque des revendications précédentes, dans lequel l'algorithme de filtrage (31) comprend un algorithme de filtrage noyau en utilisant une taille noyau qui ne varie pas sur l'ensemble de données.

8. Procédé selon l'une quelconque des revendications précédentes, dans lequel au moins deux ensembles de données d'image filtrés (32) sont calculés avec différents algorithmes de filtrage (31), et cependant l'ensemble de données d'image de sortie (36) est une combinaison linéaire desdits au moins deux ensembles de données d'image filtrés (32) avec ou sans l'ensemble de données d'image d'entrée (30), les pondérations de la combinaison linéaire étant décrites par au moins une fonction de pondération avec variation spatiale.

9. Procédé pour filtrer un ensemble de données d'image comprenant les étapes suivantes:

- fournir un ensemble de données d'image d'entrée à des fins médicaux à N dimensions (30) acquis avec ultrasons ;
- appliquer un premier algorithme de filtrage (31) pour l'ensemble de données d'image d'entrée (30), dans lequel l'algorithme de filtrage est essentiellement invariant sur l'ensemble de données, afin d'obtenir de ce fait un premier ensemble de données d'image filtré (32) ;
- appliquer un deuxième algorithme de filtrage (31) pour l'ensemble de données d'image d'entrée (30), dans lequel l'algorithme de filtrage est essentiellement invariant sur l'ensemble de données, afin d'obtenir de ce fait un deuxième ensemble de données d'image filtré (32) ; dans lequel cette étape pourrait être répétée avec différents types d'algorithmes (31) afin d'obtenir de ce fait d'autres ensembles de données d'image filtrés (32) ;
- fournir une fonction de pondération avec variation spatiale (34) entre lesdites au moins deux ensembles de données d'images filtrés et en cas échéant l'ensemble de données d'image d'entrée (30) ;
- calculer (33) une somme pondérée desdits au moins deux ensembles de données d'image filtrés, ou une somme pondérée desdits au moins deux ensembles de données d'image filtrés (32) et de l'ensemble de données d'image d'entrée (30), utilisant de ce fait la fonction de pondération avec variation spatiale (34) afin d'obtenir un ensemble de données d'image de sortie (36),

**caractérisé en ce que**
l'ensemble de données d'entrée à N dimensions (30) contienne des données d'image en forme de valeurs pixel/voxel, et la fonction de pondération avec variation spatiale soit indépendante des valeurs en pixel/voxel de l'ensemble de données d'image d'entrée, et
**en ce que** la fonction de pondération avec variation spatiale dépende de la géométrie de l'ensemble de données d'image d'entrée (30), c'est-à-dire de la distribution et configuration de ses pixels/voxels dans l'espace, cependant l'ensemble de données d'image d'entrée (30) possède une taille en pixel/voxel avec variation spatiale, et/ou la fonction de pondération avec variation spatiale dépend de modalité d'acquisition de l'ensemble de données d'entrée (28).

10. Appareil (50) pour le traitement d'un ensemble de données d'image, dans lequel l'appareil comprend :

- un stockage de données (53), dans lequel un ensemble de données d'images d'entrée à des fins médicaux (30) acquis avec ultrasons, contenant des données d'image en forme de pixel/voxel est stocké, et qui est capable de stocker d'autres ensembles de données d'image ainsi qu'une fonction de pondération avec variation spatiale (34), la fonction de pondération avec variation spatiale étant indépendante des valeurs pixel/voxel ;
- une unité de calcul (52) qui est adaptée à l'application d'un algorithme de filtrage (31) pour l'ensemble de données d'image d'entrée (30), dans lequel l'algorithme de filtrage (31) est essentiellement invariant sur l'ensemble de données, afin d'obtenir de ce fait un ensemble de données d'image filtré (32) ; et qui est adapté pour calculer la somme pondérée de l'ensemble de données d'image d'entrée et l'ensemble de données d'image filtré, utilisant de ce fait la fonction de pondération avec variation spatiale (34) afin d'obtenir un ensemble de données d'image de sortie (36) ;

**caractérisé en ce que**
l'ensemble de données d'entrée à N dimensions (30) contienne des données d'image en forme de valeurs pixel/voxel, et la fonction de pondération avec variation spatiale soit indépendante des valeurs pixel/voxel de l'ensemble de données d'image d'entrée, et
**en ce que** la fonction de pondération avec variation spatiale dépende de la géométrie de l'ensemble de données d'image d'entrée (30), c'est-à-dire de la distribution et configuration de ses pixels/voxels dans l'espace, dans lequel l'ensemble de données d'image d'entrée (30) possède une taille en pixel/voxel avec variation spatiale, et/ou la fonction de pondération avec variation spatiale dépend de la modalité d'acquisition de l'ensemble de données d'image d'entrée (28).

11. Appareil (50) selon la revendication 10, qui est capable de mettre en oeuvre le procédé selon l'une des revendications 1 à 9.

12. Support de données contenant des signaux à lecture électronique qui puissent interagir avec un système d'ordinateur programmable pour mettre en exécution de ce fait le procédé selon l'une des revendications 1 à 9.

13. Produit logiciel informatique comprenant un code de programmation pour mettre en oeuvre le procédé selon l'une des revendications 1 à 9 chaque fois que le programme est exécuté dans un ordinateur.

Fig. 1

Fig. 2

Fig. 3

Fig. 4

Fig. 5

Fig. 6

*Fig. 7*

Fig. 8

Fig. 9

Fig. 10

Fig. 11

Fig. 12

Fig. 13

Fig. 14

Fig. 15

Fig. 16

Fig. 17

**REFERENCES CITED IN THE DESCRIPTION**

**Patent documents cited in the description**

- EP 1755082 A2